# EUROPÄISCHE PATENTSCHRIFT

(11) **EP 0 638 475 B1**
(45) Veröffentlichungstag und Bekanntmachung des Hinweises auf die Patenterteilung: **24.09.1997**
(21) Anmeldenummer: 94110727.8
(22) Anmeldetag: 11.07.1994
(51) Int. Cl.: B62K 17/00, A63C 17/06

(54) **Tret-Roller**
Scooter
Véhicule du type scooter

(30) Priorität: 12.08.1993 DE 9312041 U
(43) Veröffentlichungstag der Anmeldung: 15.02.1995
(73) Patentinhaber: Hinderhofer, Jürgen, D-88400 Biberach an der Riss (DE)
(72) Erfinder: Hinderhofer, Jürgen, D-88400 Biberach an der Riss (DE)
(74) Vertreter: Fay, Hermann, Dipl.-Phys. Dr.

(56) Entgegenhaltungen:
- DE-A- 3 138 095
- DE-A- 4 212 051
- GB-A- 2 210 592
- US-A- 2 125 568
- US-A- 3 647 241
- US-A- 4 394 029

## Beschreibung

Die Erfindung betrifft einen Tretroller entsprechend dem Oberbegriff von Anspruch 1.

Ein derartiges Fahrzeug ist bekannt aus DE-GM 91 12 537. Beschrieben wird hierin ein grosser Freizeitroller, der übergroße Räder aufweist und gute Laufeigenschaften besitzen soll. Er ist in seinen Abmessungen so, daß er sich für die Benutzung von Jugendlichen und Erwachsenen eignet. Er soll insbesondere als umweltfreundliches Trimm- und Freizeitgerät einsetzbar sein. Er soll auch für Besorgungen im Stadtbereich verwendet werden können. Genauso kann er aber auch als Fortbewegungsmittel auf einem Firmengelände oder in grossen Hallen eingesetzt werden.

Nachteilig an dieser vorgeschlagenen Erfindung ist sein hohes Gewicht und seine Sperrigkeit durch "grösseren Rahmen mit zwei grossen Rädern" (siehe Seite 3, Absatz 1 der Beschreibung). Dieser Freizeitroller kann nur umständlich in einem PKW-Kofferraum untergebracht und so ins freie Gelände befördert werden; dorthin, wo er in der freien Natur bei frischer Luft gefahren werden kann. Der Kofferraumdeckel muß während des Transports wenigstens teilweise geöffnet bleiben. Auch zur Mitnahme in öffentlichen Verkehrsmitteln ist dieser Stand der Technik zu sperrig und zu schwer. Nur mit Mühe und mit Anstrengung ist er in die engen Eingänge von Bussen und Bahnen zu hieven. Und dort nimmt er viel Stellfläche ein.

In der DE-A-31 38 095 ist ein Fortbewegungs- und Transportmittel mit drei Rädern offenbart. Über dem Vorderrad ist ein Gepäckträger angeordnet. Ein als Trittbrett ausgebildeter rückwärtiger Teil ist ganz oder teilweise hochklappbar ausgebildet. Das Trittbrett ist über zwei Gelenke so klappbar ausgestaltet, daß die hinteren, walzenförmigen Räder eine stabile Dreipunktauflage ergeben und so zu einem speziellen, in seinen äußeren Abmessungen erheblich reduzierten Transportmittel wird, das ohne Schwierigkeiten in Geschäften und öffentlichen Verkehrsmitteln mitgeführt werden kann. Der Benutzer kann sich damit relativ schnell durch eigene Muskelkraft fortbewegen und dabei Dinge des täglichen Bedarfs befördern.

Nachteilig an solch einem Zweckfahrzeug, insbesondere zum "Lastentransport" ist, daß es wegen der relativ kleinen Räder bzw. Walzen nicht für den universellen Einsatz, hauptsächlich als leichtläufiges Trimm- und/oder Freizeitfahrzeug im Gelände verwendet werden kann. Es kann nicht oder nur unter erheblichem Kraftaufwand auf unebenem und/oder unbefestigtem Boden bewegt werden. Nachteilig ist auch eine gewisse Instabilität des Fahrzeugs durch die Zusammenklappbarkeit des Trittbrettes.

Es ist die Aufgabe der vorliegenden Erfindung einen Tretroller so zu verbessern, daß dieser als Kompaktfahrzeug für universelle Einsatzgebiete verwendbar ist und leicht und problemlos in anderen Verkehrsmitteln mitnehmbar ist und daß der Tretroller gute und sichere Fahreigenschaften und Leichtläufigkeit aufweist und daß das Gefährt je nach Baugrösse, bei ungeändertem Aussehen von Kinder, Jugendlichen und Erwachsenen fahrbar sein soll und daß es in Serie einfach und kostengünstig herstellbar ist.

Diese Aufgabe wird erfindungsgemäß durch die kennzeichnenden Merkmale des Anspruchs 1 gelöst.

Mit einem kleinen Hinterrad, das unter der Trittfläche angeordnet ist, kann die Baulänge eines Tretrollers kleiner gehalten werden. Auch ergibt sich daraus eine Verringerung im Gewicht. Es wird so ein Kompakfahrzeug geschaffen, das sich für viele unterschiedliche Zwecke einsetzen läßt, das leicht und trotzdem sicher läuft, und das in privaten und öffentlichen Verkehrsmitteln (auch in Personenaufzügen) wegen des relativ geringen Gewichts und der verkürzten Baulänge problemlos transportierbar ist.

Das bogenförmige Gestellteil hat in der gesamten Krümmung seines Viertelkreisbogens gleichen radialen Abstand zum Umfang des Vorderrades und zur Radachse. Bei radialer Verschiebung des bogenförmigen Gestellteils um die Radachse bzw. das Vorderrad ergibt sich eine Veränderung der horizontalen Abstände vom vorderen und vom anderen Ende des Gestellteils zur vertikalen Achsebene des Vorderrades. Die Erfindung macht sich dies zunutze und ordnet das viertelkreisförmige Gestellteil mit seinem anderen Ende, und der daran befestigten Trittfläche unterhalb der horizontalen Achsebene des Vorderrades an. Die horizontale Trittfläche bildet zum bogenförmigen Gestellteil im Bereich seiner Befestigungsstelle auf diese Weise einen spitzen Winkel. Die Verkürzung des horizontalen Abstandes zwischen dem anderen Ende des Gestellteiles und der vertikalen Achsebene des Vorderrades, verkürzt sich auch die Gesamtlänge des erfindungsgemäßen Tretrollers dadurch, daß die Befestigungsstelle der Trittfläche am Gestellteil entsprechend näher an die vertikale Achsebene des Vorderrades geschoben ist. Bei gleicher Länge der Trittfläche, von etwas der Länge eines Schuhes verkürzt sich deshalb die Gesamtlänge des Tretrollers um dieses Maß. Auf diese Weise wird ein Tretroller so verbessert,daß er ohne zusammengeklappt werden zu müssen kompakt und handlich ist. Der freie Raum zwischen der senkrechten Achsebene des Vorderrades und der Vorderkante der Trittfläche wird bei der vorgeschlagenen Erfindung sinnvoll genutzt und auf diese Weise der kompakte Tretroller geschaffen. Hierin unterscheidet sich die vorgeschlagene Erfindung vom Stand der Technik.

Der erfindungsgemäße Tretroller weist ein kurze Gestell in Viertelkreisform auf. An dem Gestell ist einerseits die Lenkeinrichtung und andererseits die nur schuhgroße Trittfläche, mit dem unterseitig daran befestigten Hinterrad direkt angeordnet. Das Gestell aus kreisförmig gebogenem Material ist kurz, platzsparend und leicht. Die nur schuhgroße Trittfläche mit dem darunter angeordnetem (kleinen) Hinterrad ist ohne zusätzliche Abstützeinrichtung direkt am Gestell angeordnet. Dadurch ist das ganze Fahrzeug auch von niedrigem Gewicht.

Durch das kleine Hinterrad kann der Gegenstand der Erfindung hinten niedrig und kurz gehalten werden. Das Auf- und Absteigen auf die Trittfläche kann seitlich und von hinten erfolgen. Ein Vorteil für den Benutzer.

Überraschenderweise hat sich herausgestellt, daß der erfindungsgemäße Tretroller überdurchschnittlich leicht läuft und sich mühelos lenken läßt. Es wird vermutet, daß dafür das grosse Vorderrad und das kleine Hinterrad im Fahrzeug, mit ihren unterschiedlichen Achsebenen verantwortlich sind. Hinzu kommt, daß ein grosses Vorderrad leicht über Unebenheiten im Boden hinwegrollt, ohne steckenzubleiben. Das kleine Hinterrad ist für die Verkürzung der Baulänge und zur Erzielung der kompakt kurzen Ausführung des Fahrzeugs mit verantwortlich. Das Hinterrad erfüllt seine Aufgabe als Stütz- und Laufrad vollkommen. Es dient auch der Abstützung der Trittfläche. Vorteilhafterweise braucht die Trittfläche nicht breiter zu sein, als daß zwei Füsse nebeneinander darauf Platz haben. Die niedrige Ebene der Trittfläche bedingt einen tiefliegenden Schwerpunkt des Tretrollers mit dem darauf stehenden Fahrer. Diese tiefe Schwerpunkt-Anordnung gibt dem Tretroller die ihm eigene gute Standsicherheit, auch für Leute mit unsicherer Balance.

Vorteilhaft kann das Hinterrad von wenigstens einer Laufrolle gebildet sein. Bei Verwendung mehrere Laufrollen als Hinterrad, steht das Fahrzeug quasi auf "drei Beinen" und wird dadurch insbesondere für kleine Kinder sicherer. Mit einem solchen Hinterrad kann mit dem erfindungsgemäßen Fahrzeug auch problemlos über (flache) Treppen gefahren werden. Es kann auf Rolltreppen und als Messefahrzeug im "Langsambetrieb" benützt werden.

Zum problemlosen Abstellen kann der Tretroller mit einem Ständer ausgestattet werden, der sinnvoll unter der Trittfläche angeordnet ist. Durch einen Bremsstopper unter der Trittfläche, hinter dem Hinterrad erhält die Erfindung eine sportliche Note.

Selbstverständlich ist es möglich den Tretroller mit den verschiedensten Zusatzteilen auszustatten, insbesondere mit einer Fahrradbackenbremse und weiteren handelsüblichen Fahrrad-Anbauteilen, wie Lichtanlage, Schutzblech, Klingel usw. Einer Zulassung zum Fahren in Fußgängerzonen dürfte kein Hinderungsgrund entgegenstehen.

Nachfolgend wird an einem prinzipmäßigen Ausführungsbeispiel die Erfindung erläutert.

Es zeigt
- Figur 1: den Tretroller in Seitenansicht;
- Figur 2: eine Frontansicht des Tretrollers.

Ein Tretroller 1 besteht aus einem Gestell 10,11 mit einem lenkbaren Vorderrad 2 und einem unlenkbaren Hinterrad 3, sowie aus einer Trittfläche 4. Das Vorderrad 2 ist in einer Gabel 5 befestigt. Die Gabel 5 weist an ihrer Verbindungsstelle 6 eine rohrförmige Verlängerung 7 mit einem Lenker 8 auf. Der Lenker 8 ist in der Verlängerung 7 höhenverstellbar befestigt. Das Hinterrad 3 ist über die Trittfläche 4 mit dem Gestell 10,11 verbunden. Das Vorderrad 2 ist grösser ,als das Hinterrad 3 ausgebildet. Das Gestell 10,11 ist im wesentlichen bogenförmig ausgebildet und weist Viertelkreisform auf. Das bogenförmige Gestellteil 10 hat an seinem einen Ende ein Rohrstück 11, das annähernd senkrecht und etwa im rechten Winkel am Gestellteil 10 befestigt ist. Am anderen Ende des bogenförmigen Gestellteils 10 ist im spitzen Winkel, horizontal ausgerichtet, die Trittfläche 4, in geringem Abstand zum Umfang des Vorderrades befestigt angeordnet. Das Hinterrad 3 befindet sich im hinteren Bereich unter der Trittfläche 4. Es besitzt eine Laufrolle 9. Es könnten aber auch zwei und mehrere, paralell ausgerichtete Laufrollen 9 in einem Hinterrad 3 vorgesehen sein. Ebenso könnten auch zwei oder mehrere Laufrollen 9 in einem Hinterrad 3 hintereinander angeordnet sein. Auch ist es möglich statt einer oder mehrerer Laufrollen 9 eine Walze vorzusehen.

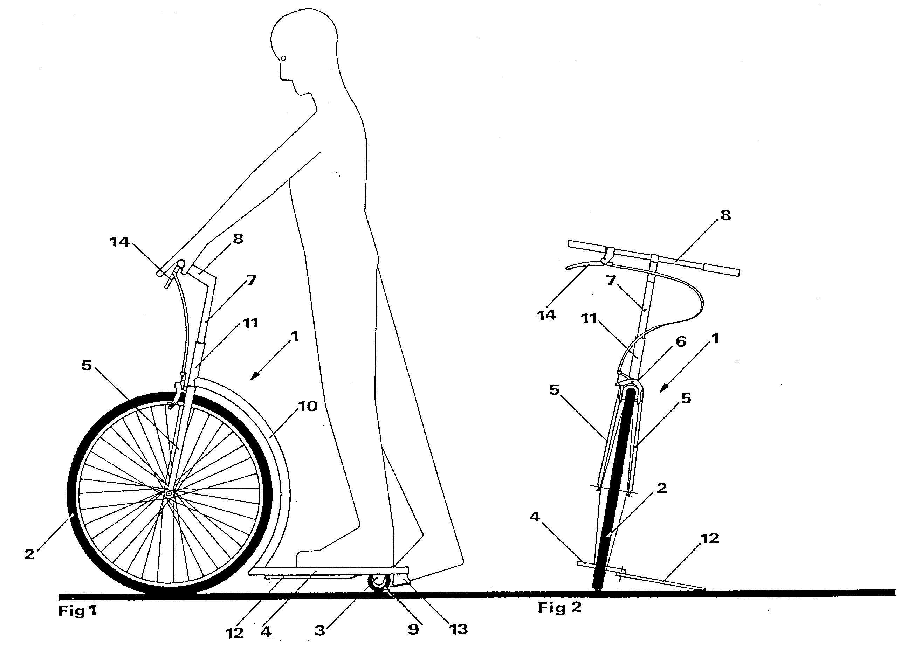

In Figur 1 ist deutlich zu sehen, daß die Achsebene des Vorderrades 2 über der Ebene der Trittfläche 4 und die Achsebene des Hinterrades 3 unter der Ebene der Trittfläche 4 angeordnet ist. Selbstverständlich wäre es auch möglich das Hinterrad 3 so im hinteren Bereich der Trittfläche anzuordnen, daß die Ebene der Achse des Hinterrades 3 in der Ebene der Trittfläche 4 zu liegen kommt, oder daß die Ebene der Achse des Hinterrades 3 geringfügig über der Ebene der Trittfläche 4 angeordnet ist, ohne daß dadurch die Vorteile des Tretrollers verloren gingen.

Unter der Trittfläche 4 ist ein Ständer 12 montiert und ganz hinten, unter der Trittfläche 4, hinter dem Hinterrad 3 ist ein Bremsstopper 13 angebracht. Dieser gibt dem erfindungsgemässen Tretroller 1 eine gewisse sportliche Note. Normalerweise wird der Tretroller 1 mit einer Fahrradbackenbremse 14 gebremst. Die Fahrradbackenbremse 14 greift am Vorderrad 2 an.

Nicht zeichnerisch dargestellt, aber als weiteres Zubehör kann das vorgeschlagene Fahrzeug an dem Vorderrad 2 mit handelsüblichen Fahrrad-Bauteilen, insbesondere einer Lichtanlage, einem Schutzblech und einer Klingel ausgestattet werden. Ebenso kann am Vorderrad 2 ein Hilfsmotor installiert werden. Es besteht auch die Möglichkeit einen Regenschutz (Sonnenschutz) anzubringen.

Mit der vorgeschlagenen Erfindung wird ein Freizeitroller so verbessert, bzw. ein Tretroller geschaffen, der als Kompaktgerät für universelle Einsatzgebiete verwendbar ist. Er kann in einem Personenauto und öffentlichen Verkehrsmittel leicht und problemlos untergebracht und transportiert werden, ohne ihn zusammenklappen oder zerlegen zu müssen. Dies ist möglich, weil der Erfindungsgegenstand kompakt, von kurzer Baulänge und von geringem Gewicht ist. Das Fahrzeug besitzt gute und sichere Fahreigenschaften; es ist leichtläufig und leicht zu lenken. Letzteres ist ein überraschendes Ergebnis und ist vermutlich auf die beiden unterschiedlichen Achsebenen von Vorderrad 2 und Hinterrad 3, mit der dazwischen angeordnet liegenden Ebene der Trittfläche 4 zurückzuführen.

Der vorgeschlagene Tretroller 1 ist in gleicher Ausführung in unterschiedlichen Baugrössen herstellbar und kann so von Kindern, Jugendlichen und Erwachsenen gleichermaßen verwendet werden. Dadurch und insbesondere durch die Verwendung von Serienteilen aus der Fahrradproduktion ist die Erfindung einfach und kostengünstig herstellbar. Das vorgeschlagene Fahrzeug ist umweltfreundlich, geräuschlos, bedingt schnell, schneller jedenfalls als ein Fußgänger und es dient der körperlichen Ertüchtigung.

## Patentansprüche

1. Tretroller(1) mit einem, an einem Gestell (10,11) angeordnetem, lenkbarem Vorderrad (2) und einem unlenkbarem Hinterrad (3) und einer Trittfläche (4), wobei das Vorderrad (2) in einer, im wesentlichen senkrecht nach oben gerichteten Gabel (5) befestigt ist, wobei die Gabel (5) an ihrer Verbindungsstelle (6) eine rohrförmige, ebenfalls nach oben gerichtete Verlängerung (7) mit Lenker(8) aufweist und daß das Vorderrad (2) mit der Gabel (5) und der Verlängerung (7) horizontal beweglich am einen Ende des Gestells (10,11) als eine Einheit angeordnet sind und daß das Hinterrad (3) im hinteren Bereich mit dem Gestell (10,11) verbunden ist,
**dadurch gekennzeichnet**, daß
das Vorderrad (2) und das Hinterrad (3) unterschiedliche Grösse dadurch aufweisen, daß das Vorderrad (2) grösser als das Hinterrad (3) ausgebildet ist,
daß das Gestell (10,11) im wesentlichen bogenförmig ausgebildet ist und annähernd Viertelkreisform aufweist, wobei das bogenförmige Gestellteil (10) an seinem einen Ende ein annähernd rechtwinkelig, senkrecht angeordnetes Rohrstück (11) aufweist und daß am anderen Ende des bogenförmigen Gestellteils (10) im spitzen Winkel horizontal die Trittfläche (4) angeordnet ist, wobei das Hinterrad (3) über die Trittfläche (4) mit dem Gestell (10,11) verbunden ist und daß das Hinterrad (3) im hinteren Bereich unter der Trittfläche (4) angeordnet ist

2. Tretroller nach Anspruch 1
**dadurch gekennzeichnet**,
daß im Bereich der Trittfläche (4) ein Ständer (12) angeordnet ist.

3. Tretroller nach Anspruch 1
**dadurch gekennzeichnet**,
daß unter der Trittfläche (4) hinter dem Hinterrad (3) ein Bremsstopper (13) angeordnet ist.

## Claims

1. A scooter (1) comprising a steerable front wheel (2) arranged on a frame (10, 11) and a non-steerable rear wheel (3) and a foot surface (4), wherein the front wheel (2) is fixed in a substantially perpendicularly upwardly directed fork (5), wherein at its connection (6) the fork (5) has a tubular, also upwardly directed extension (7) with handlebars (8) and the front wheel (2) with the fork (5) and the extension (7) are arranged horizontally movably as a unit at one end of the frame (10, 11) and the rear wheel (3) is connected to the frame (10, 11) in the rear region, characterised in that the front wheel (2) and the rear wheel (3) are of different sizes by virtue of the front wheel (2) being larger than the rear wheel (3), the frame (10, 11) is of a substantially arcuate configuration and is approximately in the form of a quarter of a circle, wherein the arcuate frame portion (10) has at its one end a tube portion (11) which is arranged approximately at a right angle and perpendicularly, and that the foot surface (4) is arranged at the other end of the arcuate frame portion (10) at an acute angle horizontally, wherein the rear wheel (3) is connected to the frame (10, 11) by way of the foot surface (4), and that the rear wheel (3) is arranged in the rear region under the foot surface (4).

2. A scooter according to claim 1 characterised in that a stand (12) is arranged in the region of the foot surface (4).

3. A scooter according to claim 1 characterised in that a brake stopper (13) is arranged under the foot surface (4) behind the rear wheel (3).

## Revendications

1. Patinette (1) comportant une roue avant (2) orientable montée sur un cadre (10, 11), une roue arrière (3) non orientable et une plateforme marchepied (4), la roue avant (2) étant fixée dans une fourche (5) orientée sensiblement verticalement vers le haut, la fourche (5) présentant au niveau de son point de raccordement (6) un prolongement (7) tubulaire également orienté vers le haut avec un guidon (8), la roue avant (2) avec la fourche (5) et le prolongement (7), en tant qu'ensemble, étant montée mobile dans la direction horizontale à l'une des extrémités du cadre (10, 11) et la roue arrière (3) étant liée au cadre (10, 11) dans la région arrière de celui-ci, caractérisé par le fait que la roue avant (2) et la roue arrière (3) ont des dimensions différentes, la roue avant (2) étant plus grande que la roue arrière (3), par le fait que le cadre (10, 11) a une conformation essentiellement arquée et a sensiblement la forme d'un quart de cercle, la partie (10) de cadre en arc de cercle comportant à l'une de ses extrémités un tronçon de tube (11) disposé verticalement, sensiblement à angle droit, et par le fait que la plateforme marchepied (4) est disposée horizontalement à l'autre extrémité de la partie de cadre (10) arquée et forme un angle aigu avec celle-ci, la roue arrière (3) étant liée au cadre (10, 11) par l'intermédiaire de la plateforme marchepied (4) et par le fait que la roue arrière (3) est disposée dans la région arrière sous la plateforme marchepied (4).

2. Patinette selon la revendication 1, caractérisée par le fait qu'une béquille support (12) est disposée dans la région de la plateforme marchepied (4).

3. Patinette selon la revendication 1, caractérisée par le fait qu'un frein (13) est disposée en-dessous de la plateforme marchepied (4), derrière la roue arrière (3).
